# EUROPEAN PATENT APPLICATION

(11) **EP 4 024 771 A1**
(43) Date of publication of application: **06.07.2022**
(21) Application number: 20865300.6
(22) Date of filing: 14.09.2020
(51) Int. Cl.: H04L 12/26

(54) **NETWORK MEASUREMENT SYSTEM AND METHOD, DEVICE AND STORAGE MEDIUM**

(30) Priority: 19.09.2019 CN 201910886165
(71) Applicant: Huawei Technologies Co., Ltd., Longgang District Shenzhen, Guangdong 518129 (CN)
(72) Inventor: LI, Junwu, Shenzhen, Guangdong 518129 (CN); ZHENG, Kai, Shenzhen, Guangdong 518129 (CN); ZHANG, Yongming, Shenzhen, Guangdong 518129 (CN)
(74) Representative: Maiwald Patent- und Rechtsanwaltsgesellschaft mbH
(86) International application number: PCT/CN2020/114983
(87) International publication number: WO 2021/052280

(57) **Abstract**

This application provides a network measurement system and method, a device, and a storage medium. A control node obtains a measurement task and a first identifier, where the measurement task includes packet header information of a service packet, generates a measurement packet based on the packet header information and the first identifier, and delivers the measurement packet to a first measurement node. The first measurement node is configured to capture and parse the measurement packet, to obtain first measurement information of the measurement packet, and send the first measurement information to an analysis node. The analysis node obtains a network measurement result based on the first measurement information. Based on this, the control node does not need to perform network measurement by using the service packet. Therefore, normal service execution is not affected, and reliability of an entire communication network is improved.

## Description

This application claims priority to Chinese Patent Application No. 201910886165.6, filed with the China National Intellectual Property Administration on September 19, 2019 and entitled "NETWORK MEASUREMENT SYSTEM, METHOD, DEVICE, AND STORAGE MEDIUM", which is incorporated herein by reference in its entirety.

### TECHNICAL FIELD

This application relates to the field of communication technologies, and in particular, to a network measurement system and method, a device, and a storage medium.

### BACKGROUND

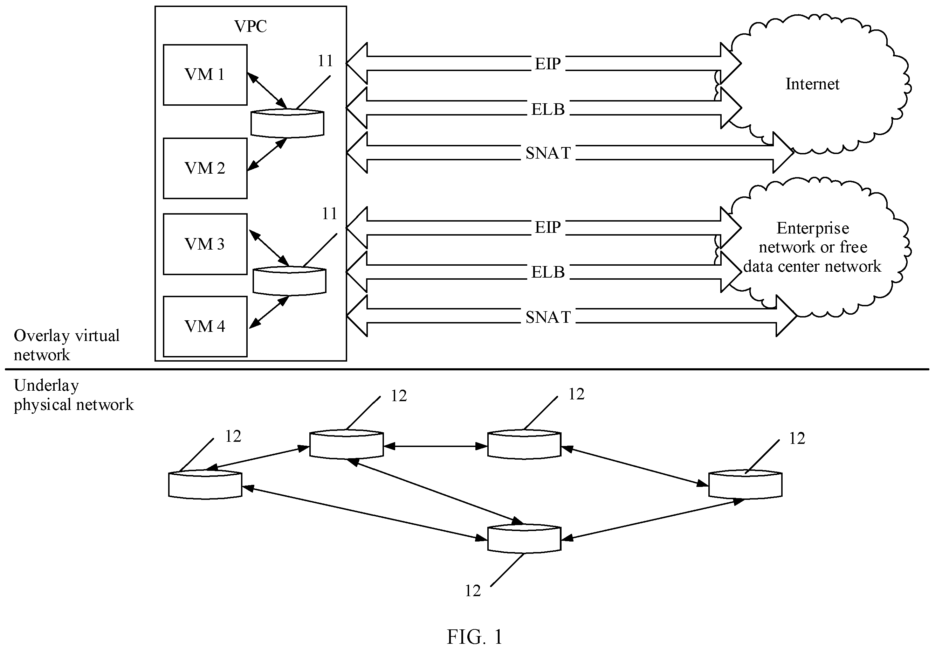

Currently, there are a data center network and a cloud network, and the cloud network is particularly favored by users. The data center network is also referred to as a conventional data center network. Compared with the conventional data center network, the cloud network is highly virtualized, including virtualization of a server, storage, a network, an application, and the like. However, the conventional data center network is not related to a virtualization technology. FIG. 1 is a schematic diagram of service logic of a cloud network according to the conventional technology. As shown in FIG. 1, in order to break through a 4K quantity limitation of virtual local area network (Virtual Local Area Network, VLAN) and enable a cloud platform to provide services for more tenants, tunneling technologies such as a virtual extensible local area network (Virtual Extensible Lan, Vxlan), network virtualization using generic routing encapsulation (Network Virtualization using Generic Routing Encapsulation, Nvgre), a stateless transport tunneling protocol (Stateless Transport Tunneling Protocol, STT), and generic network virtualization encapsulation (Generic Network Virtualization Encapsulation, Geneve) are generally used, a network formed by a plurality of physical network devices 12 is used as an underlay physical network (underlay network), and an overlay virtual network (overlay network) is constructed on the underlay physical network.

The cloud network is related to a large amount of network traffic, for example, layer 2/layer 3 (L2/L3) traffic in a virtual private cloud (Virtual Private Cloud, VPC), east-west traffic between VPCs, elastic internet protocol (Elastic Internet protocol, EIP) traffic, public network access traffic of load balancing (Load Balancing, LB), public network access traffic of source network address translation (Source Network Address Translation, SNAT), VPN traffic, and private line traffic. This forms a plurality of types of service packets. The service packet is transmitted between servers by using a virtual switch or a physical switch. It is well known that the cloud network or the data center network is prone to problems such as a network fault and a network delay. To locate these problems, network measurement is proposed. In the conventional technology, an identifier is added to a service packet, and a server and a switch obtain a packet capture rule. The rule includes the identifier added to the service packet. The server and the switch capture packets according to the packet capture rule, obtain measurement information of the service packet, for example, a capture time and a capture location of the service packet, and feed back the measurement information to an analysis node. The analysis node analyzes measurement information sent by servers and switches to obtain a measurement result, and locates a network fault or determines a network delay based on the measurement result. However, because the identifier needs to be added to the service packet, normal execution of a service is affected.

### SUMMARY

This application provides a network measurement system and method, a device, and a storage medium. Based on this, the control node does not need to perform network measurement by using the service packet. Therefore, normal service execution is not affected, and reliability of an entire communication network is improved.

According to a first aspect, this application provides a network measurement system, including a control node, an analysis node, a first measurement node, and a first agent node. The control node is configured to obtain a measurement task and a first identifier, where the measurement task includes packet header information of a service packet, generate a measurement packet based on the packet header information and the first identifier, and deliver the measurement packet to the first measurement node by using the first agent node. The first identifier is used to identify that the measurement packet is a packet used for network measurement. The first measurement node is configured to capture and parse the measurement packet, to obtain first measurement information of the measurement packet, and send the first measurement information to the analysis node. The first measurement information includes at least one of the following: the measurement packet, time at which the first measurement node captures the measurement packet, an identifier of the first measurement node, and a quantity of measurement packets delivered in the measurement task. The analysis node is configured to obtain a network measurement result based on the first measurement information. Therefore, the control node does not need to perform network measurement by using the service packet. Therefore, normal service execution is not affected, and reliability of an entire communication network is improved.

Optionally, the system further includes a second measurement node. The first measurement node is further configured to send the measurement packet to the second measurement node. The second measurement node is configured to capture and parse the measurement packet, to obtain second measurement information of the measurement packet, and send the second measurement information to the analysis node. The second measurement information includes at least one of the following: the measurement packet, time at which the second measurement node captures the measurement packet, an identifier of the second measurement node, and the quantity of measurement packets delivered in the measurement task. Correspondingly, the analysis node is specifically configured to obtain the network measurement result based on the first measurement information and the second measurement information. Optionally, the second measurement node is a last node on a to-be-measured path, and the second measurement node is further configured to discard the measurement packet after obtaining the second measurement information, to avoid impact on a normal service.

Optionally, if the measurement packet is a measurement packet on a forwarding plane of a cloud network, the measurement packet includes an external packet header and an internal packet header, the external packet header includes a tunnel header related to a tunnel encapsulation manner of the cloud network, and the internal packet header includes the packet header information and the first identifier.

Optionally, if the measurement packet is a measurement packet on a control plane of a cloud network, the measurement packet includes an internal packet header, and the internal packet header includes the packet header information and the first identifier.

Optionally, if the measurement packet is a measurement packet in a data center network, the measurement packet includes the packet header information and the first identifier.

Optionally, the first identifier is located after the packet header information. Because the first identifier is carried after the packet header information, to be specific, for any measurement node, the first identifier is not removed, any measurement node can capture the measurement packet. This can implement network measurement.

Optionally, the measurement packet further includes a second identifier. The second identifier is used to identify the measurement task.

Optionally, the second identifier is located after the packet header information.

Optionally, the measurement packet further includes a third identifier, and the third identifier is used to identify whether the measurement packet includes a data part of the service packet.

Optionally, the control node is further configured to deliver at least one packet capture rule to the first measurement node by using the first agent node. The packet capture rule includes the first identifier, so that the first measurement node captures the measurement packet by using the first identifier.

Optionally, the at least one packet capture rule in the Ethernet includes at least one of the following: a packet capture rule corresponding to a data link layer, a delivery rule corresponding to a network layer, and a delivery rule corresponding to a transport layer. To be specific, in this application, the control node only needs to construct the measurement packet, and the control node only needs to deliver at least one of a packet capture rule at an L2, a packet capture rule at an L3, and a packet capture rule at an L4. This can reduce network overheads.

Optionally, the first identifier has a validity period.

Optionally, the first measurement node is specifically configured to send the first measurement information to the corresponding first agent node, so that the first agent node sends the first measurement information to the analysis node. Alternatively, the first measurement node is specifically configured to directly send the first measurement information to the analysis node.

Optionally, for the cloud network, the measurement task further includes at least one of the following: tenant information, a tunnel encapsulation manner of an underlay physical network of the cloud network, an identifier of an isolation domain to which a tenant belongs, a quantity of measurement packets delivered in the measurement task, and a sending rate of the measurement packet in the measurement task. For the data center network, the measurement task further includes at least one of the following: the quantity of measurement packets delivered in the measurement task and the sending rate of the measurement packet in the measurement task.

Optionally, the packet header information successively includes at least one of the following: information of the service packet at the data link layer, information of the service packet at the network layer, and information of the service packet at the transport layer.

Optionally, the system further includes a storage node, configured to store at least one of the following: the measurement task and the first measurement information.

Optionally, the first measurement node is further configured to add at least one of the following to the measurement packet: time information of capturing the measurement packet by the first measurement node, and the identifier of the first measurement node.

The following describes a network measurement system, a network measurement method, an apparatus, a device, a storage medium, and a computer program product. For effects of the network measurement system, refer to effects of the foregoing network measurement system. Details are not described in the following again.

According to a second aspect, this application provides a network measurement system, including a control node, an analysis node, a first measurement node, and a first agent node. The control node is configured to obtain a measurement task and a first identifier. The measurement task includes packet header information of a service packet, and the first identifier is used to identify that a measurement packet is a packet used for network measurement. The control node sends the packet header information and the first identifier to the first measurement node by using the first agent node. The first measurement node generates the measurement packet based on the packet header information and the first identifier, captures and parses the measurement packet, to obtain first measurement information of the measurement packet, and sends the first measurement information to the analysis node. The first measurement information includes at least one of the following: the measurement packet, time at which the first measurement node captures the measurement packet, an identifier of the first measurement node, and a quantity of measurement packets delivered in the measurement task. The analysis node is configured to obtain a network measurement result based on the first measurement information.

According to a third aspect, this application provides a network measurement method, including: A control node obtains a measurement task and a first identifier. The measurement task includes packet header information of a service packet. The control node generates a measurement packet based on the packet header information and the first identifier. The control node delivers the measurement packet to a first measurement node by using a first agent node. The first identifier is used to identify that the measurement packet is a packet used for network measurement.

Optionally, the method further includes: The control node delivers at least one packet capture rule to the first measurement node by using the first agent node. The packet capture rule includes the first identifier, so that the first measurement node captures the measurement packet by using the first identifier.

According to a fourth aspect, this application provides a network measurement method, including: A first measurement node captures and parses a measurement packet, to obtain first measurement information of the measurement packet. The measurement packet is generated based on packet header information of a service packet and a first identifier, the first identifier is used to identify that the measurement packet is a packet used for network measurement, and the first measurement information includes at least one of the following: the measurement packet, time at which the first measurement node captures the measurement packet, an identifier of the first measurement node, and a quantity of measurement packets delivered in a measurement task. The first measurement node sends the first measurement information to an analysis node.

Optionally, before a first measurement node captures and parses a measurement packet, the method further includes: The first measurement node receives at least one packet capture rule delivered by a control node by using a first agent node. The packet capture rule includes the first identifier. The first measurement node captures the measurement packet by using the first identifier.

According to a fifth aspect, this application provides a network measurement method, including: A control node obtains a measurement task and a first identifier. The measurement task includes packet header information of a service packet. The control node sends the packet header information and the first identifier to a first measurement node by using a first agent node, so that the first agent node generates a measurement packet based on the packet header information and the first identifier. The first identifier is used to identify that the measurement packet is a packet used for network measurement.

According to a sixth aspect, this application provides a network measurement method, including: A first measurement node receives packet header information of a service packet and a first identifier that are sent by a control node by using a first agent node. The first measurement node generates a measurement packet based on the packet header information and the first identifier. The first identifier is used to identify that the measurement packet is a packet used for network measurement. The first measurement node captures and parses the measurement packet, to obtain first measurement information of the measurement packet. The first measurement node sends the first measurement information to an analysis node. The first measurement information includes at least one of the following: the measurement packet, time at which the first measurement node captures the measurement packet, an identifier of the first measurement node, and a quantity of measurement packets delivered in a measurement task.

According to a seventh aspect, this application provides a control node, including:
an obtaining module, configured to obtain a measurement task and a first identifier, where the measurement task includes packet header information of a service packet;
a generation module, configured to generate a measurement packet based on the packet header information and the first identifier; and
a first delivering module, configured to deliver the measurement packet to a first measurement node by using a first agent node, where the first identifier is used to identify that the measurement packet is a packet used for network measurement.

According to an eighth aspect, the control node further includes a second delivering module, configured to deliver at least one packet capture rule to the first measurement node by using the first agent node. The packet capture rule includes the first identifier, so that the first measurement node captures the measurement packet by using the first identifier.

According to a ninth aspect, this application provides a measurement node. The measurement node is a first measurement node and includes:
a processing module, configured to capture and parse a measurement packet, to obtain first measurement information of the measurement packet, where the measurement packet is generated based on packet header information of a service packet and a first identifier, the first identifier is used to identify that the measurement packet is a packet used for network measurement, and the first measurement information includes at least one of the following: the measurement packet, time at which the first measurement node captures the measurement packet, an identifier of the first measurement node, and a quantity of measurement packets delivered in a measurement task; and
a sending module, configured to send the first measurement information to an analysis node.

Optionally, the first measurement node further includes:
a receiving module, configured to: before the processing module captures and parses the measurement packet, receive at least one packet capture rule delivered by a control node by using a first agent node, where the packet capture rule includes the first identifier; and
a capturing module, configured to capture the measurement packet by using the first identifier.

According to a tenth aspect, this application provides a control node, including:
an obtaining module, configured to obtain a measurement task and a first identifier, where the measurement task includes packet header information of a service packet; and
a sending module, configured to send the packet header information and the first identifier to a first measurement node by using a first agent node, so that the first agent node generates a measurement packet based on the packet header information and the first identifier. The first identifier is used to identify that the measurement packet is a packet used for network measurement.

According to an eleventh aspect, this application provides a measurement node. The measurement node is a first measurement node and includes:
a receiving module, configured to receive packet header information of a service packet and a first identifier that are sent by a control node by using a first agent node;
a generation module, configured to generate a measurement packet based on the packet header information and the first identifier, where the first identifier is used to identify that the measurement packet is a packet used for network measurement;
a processing module, configured to capture and parse the measurement packet, to obtain first measurement information of the measurement packet; and
a sending module, configured to send the first measurement information to an analysis node. The first measurement information includes at least one of the following: the measurement packet, time at which the first measurement node captures the measurement packet, an identifier of the first measurement node, and a quantity of measurement packets delivered in a measurement task.

According to a twelfth aspect, this application provides a control node, including a memory and a processor. The memory is configured to store computer instructions. The processor is configured to run the computer instructions stored in the memory to implement the network measurement method performed by the control node.

According to a thirteenth aspect, this application provides a measurement node, including a memory and a processor. The memory is configured to store computer instructions. The processor is configured to run the computer instructions stored in the memory to implement the network measurement method performed by the first measurement node.

According to a fourteenth aspect, this application provides a chip. The chip is configured to perform the foregoing network measurement method.

According to a fifteenth aspect, this application provides a storage medium, including a readable storage medium and computer instructions. The computer instructions are stored in the readable storage medium, and the computer instructions are used to implement the foregoing network measurement method.

According to a sixteenth aspect, this application provides a computer program product, and the computer program product includes computer instructions (namely, computer programs), to implement the foregoing network measurement method.

In conclusion, this application provides a network measurement system and method, a device, and a storage medium. A control node may obtain packet header information of a service packet and a first identifier, and construct a measurement packet based on the packet header information and the first identifier. Alternatively, the control node obtains the packet header information of the service packet and the first identifier, and sends the packet header information and the first identifier to a first measurement node. The first measurement node constructs the measurement packet based on the packet header information and the first identifier. Finally, the system performs network measurement based on the constructed measurement packet. Based on this, the control node does not need to perform network measurement by using the service packet. Therefore, normal service execution is not affected, and reliability of an entire communication network is improved.

### BRIEF DESCRIPTION OF DRAWINGS

FIG. 1 is a schematic diagram of service logic of a cloud network in the conventional technology;
FIG. 2 is a schematic diagram of a data center network according to an embodiment of this application;
FIG. 3 is a schematic diagram of a cloud network according to an embodiment of this application;
FIG. 4 is a schematic diagram of a network measurement system according to an embodiment of this application.
FIG. 5 is a schematic diagram of a measurement packet on a forwarding plane according to an embodiment of this application;
FIG. 6 is a schematic diagram of a measurement packet on a control plane according to an embodiment of this application;
FIG. 7 is a schematic diagram of a measurement packet in a data center network according to an embodiment of this application;
FIG. 8 is a schematic diagram of a network measurement system according to another embodiment of this application.
FIG. 9 is a schematic diagram of a network measurement system according to still another embodiment of this application.
FIG. 10 is an interaction flowchart of a network measurement method according to an embodiment of this application;
FIG. 11 is an interaction flowchart of a network measurement method according to another embodiment of this application;
FIG. 12 is a schematic diagram of a control node according to an embodiment of this application;
FIG. 13 is a schematic diagram of a first measurement node according to an embodiment of this application;
FIG. 14 is a schematic diagram of a control node according to another embodiment of this application;
FIG. 15 is a schematic diagram of a first measurement node according to another embodiment of this application;
FIG. 16 is a schematic diagram of a second measurement node according to another embodiment of this application;
FIG. 17 is a schematic diagram of a control node according to an embodiment of this application;
FIG. 18 is a schematic diagram of a first measurement node according to an embodiment of this application; and
FIG. 19 is a schematic diagram of a second measurement node according to an embodiment of this application.

### DESCRIPTION OF EMBODIMENTS

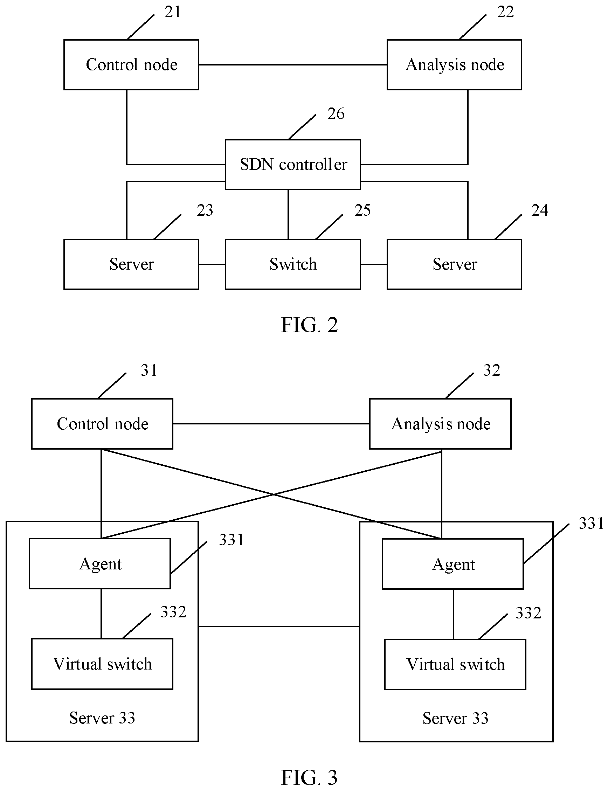

Currently, there are a data center network and a cloud network. For example, FIG. 2 is a schematic diagram of a data center network according to an embodiment of this application. As shown in FIG. 2, the data center network includes: a control node 21, an analysis node 22, at least two servers (including a server 23 used as a first node on a to-be-measured path and a server 24 used as a last node on the to-be-measured path), at least one switch 25 (used as an intermediate node on the to-be-measured path), and a software-defined network (Software-Defined Network, SDN) controller 26.

Optionally, the control node 21 is a server, or a centralized or distributed server cluster including a plurality of servers, or a chip circuit. This is not limited in this application.

Optionally, the analysis node 22 is a server, or a centralized or distributed server cluster including a plurality of servers, or a chip circuit. This is not limited in this application.

The control node 21 and the analysis node 22 may be disposed on a same server or a same chip circuit. This is not limited in this application.

Optionally, the data center network includes at least one SDN controller 26, and there is a correspondence between the at least one SDN controller 26 and a server and a switch. For example, as shown in FIG. 2, all servers and switches correspond to one SDN controller.

With large-scale cloud-based deployment of the data center network, the cloud network is used more frequently. For example, network layers of the data center network shown in FIG. 1 are divided into an underlay physical network and an overlay virtual network. The underlay physical network mainly includes physical network devices, and the virtual network mainly includes virtual devices (virtual switches, virtual routers 11, virtual machines (Virtual Machine, VM), and the like shown in FIG. 1). To fully use of resources, services of a tenant run on the overlay virtual network, and tenant resources are isolated through different virtual networks. For example, FIG. 3 is a schematic diagram of a cloud network according to an embodiment of this application. As shown in FIG. 3, the cloud network includes: a control node 31, an analysis node 32, and a plurality of servers 33. Each server 33 includes an agent (Agent) 331 and a virtual switch 332.

Optionally, the control node 31 is a server, or a centralized or distributed server cluster including a plurality of servers, or a chip circuit, or a VM, or a container, or the like. This is not limited in this application.

Optionally, the analysis node 32 is a server, or a centralized or distributed server cluster including a plurality of servers, or a chip circuit, or a VM, or a container, or the like. This is not limited in this application.

The control node 31 and the analysis node 32 may be disposed on a same server or a same chip circuit. This is not limited in this application.

Optionally, the agent 331 is an agent process running on the server 33.

Optionally, the virtual switch 332 may be disposed on a VM included in the server 33, or may not be disposed on a VM. This is not limited in this application.

It should be noted that the technical solutions provided in this application are applicable to but are not limited to the foregoing data center network and cloud network. For uniformity, a control node provided in the following in this application may be the control node 21 or the control node 31, an analysis node may be the analysis node 22 or the analysis node 33, a measurement node may be the server 23, the server 24, the switch 25, the server 33, or the virtual switch 332 in the server 33, and an agent node may be the SDN controller 26 or the agent 331.

As described above, because of an existing network measurement manner, an identifier needs to be added to a service packet. This affects normal execution of a service. To resolve the technical problem, this application provides a network measurement system and method, a device, and a storage medium.

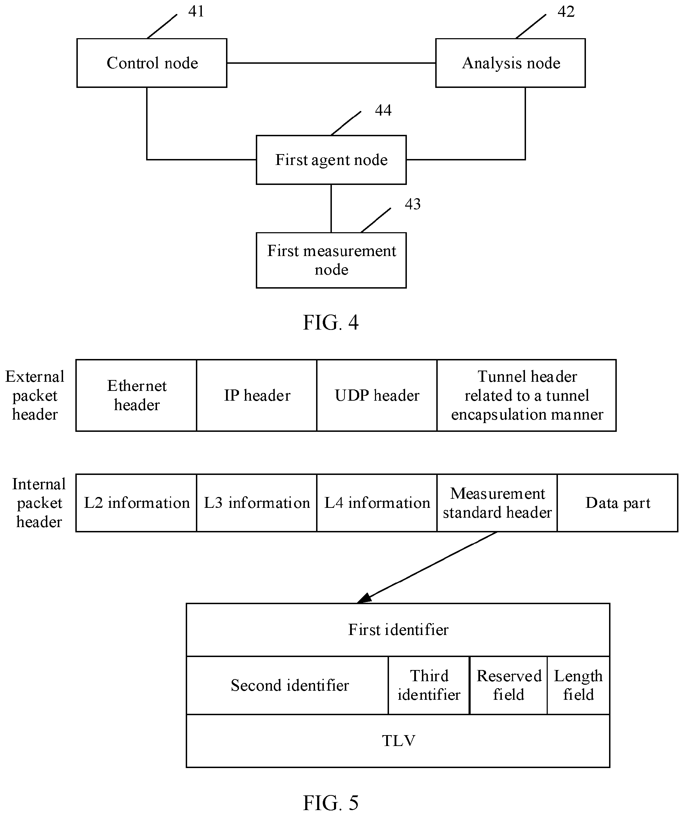

FIG. 4 is a schematic diagram of a network measurement system according to an embodiment of this application. As shown in FIG. 4, the system includes a control node 41, an analysis node 42, a first measurement node 43, and a first agent node 44. The first measurement node 43 corresponds to the first agent node 44. For example, in an overlay virtual network, each server includes an agent and a virtual switch. In this case, each virtual switch (namely, a measurement node) corresponds to one agent (namely, an agent node). The first measurement node 43 may be any measurement node on a to-be-measured path, for example, may be a first measurement node on the to-be-measured path.

An administrator may deliver a measurement task to the control node 41 by using a web (web) page or an application programming interface (Application Programming Interface, API). The measurement task may include packet header information of a service packet. Optionally, the packet header information of the service packet successively includes at least one of the following: information of the service packet at a data link layer (that is, L2 information), information of the service packet at a network layer (that is, L3 information), and information of the service packet at a transport layer (that is, L4 information). For example, the packet header information includes the L2 information of the service packet, or includes the L2 information and the L3 information of the service packet, or includes the L2 information, the L3 information, and the L4 information of the service packet. The L2 information may include: a source media access control (Media Access Control, MAC) address, a destination MAC address, an ethertype (ethertype) field, Vlan information, and the like. The L3 information may include: a source internet protocol (Internet Protocol, IP) address, a destination IP address, a protocol number, differentiated services code point (Differentiated Services Code Point, DSCP) information, and the like. The L4 information may include: a TCP/user datagram protocol (User Datagram Protocol, UDP) source port number, a TCP/UDP destination port number, and the like.

Optionally, for a cloud network, the measurement task further includes at least one of the following: tenant information, a tunnel encapsulation manner of an underlay physical network of the cloud network, an identifier of an isolation domain to which a tenant belongs, a quantity of measurement packets delivered in the measurement task, and a sending rate of the measurement packet in the measurement task.

Optionally, for a data center network, the measurement task further includes at least one of the following: the quantity of measurement packets delivered in the measurement task, and the sending rate of the measurement packet in the measurement task.

Optionally, the tenant information includes an identifier (Identity, ID) of the tenant.

Optionally, the tunnel encapsulation manner used by the underlay physical network of the cloud network may be a Vxlan, nvgre, an STT, Geneve, or the like.

In each measurement task, the control node may deliver one or more measurement packets. Optionally, the control node may preconfigure a quantity of measurement packets that need to be delivered in each measurement task and a sending rate of the measurement packet. The sending rate of the measurement packet refers to the rate at which the measurement packet is sent.

A main idea of this application is that the control node constructs the measurement packet by obtaining the packet header information of the service packet, and does not need to perform network measurement by using the service packet.

Specifically, in addition to being configured to obtain the foregoing measurement task, the control node 41 further obtains a first identifier. The first identifier is used to identify that the measurement packet is a packet used for network measurement. For example, the first identifier may also be referred to as a measurement protocol identifier (Telemetry Protocol Identifier, TPID). The first identifier has a validity period. The validity period may be one month, one quarter, or the like. A length of the first identifier may be 16 bits. This is not limited in this application.

After obtaining the packet header information and the first identifier, the control node 41 generates the measurement packet based on the packet header information and the first identifier that are included in the measurement task, that is, constructs the measurement packet.

For the cloud network, if the control node 41 needs to construct a measurement packet on a forwarding plane, the control node 41 only needs to construct an internal packet header. The forwarding plane of the cloud network is a data plane for forwarding and processing the measurement packet between the control node and the measurement node, and the forwarding plane may also be referred to as a data plane. The internal packet header includes the packet header information of the service packet and the first identifier. In a transmission process of the constructed measurement packet on the to-be-measured path, another measurement node encapsulates an external packet header for the measurement packet. The external packet header includes a tunnel header related to a tunnel encapsulation manner of the cloud network. A tunnel header related to the Vxlan is used as an example. The tunnel header includes a VXLAN network identifier (VXLAN Network Identifier, VNI), and virtual machines on a same VXLAN can communicate with each other. Optionally, the internal packet header further includes a second identifier. The second identifier is used to identify the measurement task, to be specific, the second identifier is a one-time measurement identifier. The second identifier may be a token (Token). The second identifier may be a random value of at least eight bits. In measurement tasks, if a first identifier is always valid, the measurement tasks are related to the same first identifier, but the measurement tasks are related to different second identifiers. Optionally, if the tunnel encapsulation manner used by the cloud network is the Vxlan, the external packet header further includes: an Ethernet header, an IP header, a UDP header, and the like.

For the cloud network, if the control node 41 needs to construct a measurement packet on a control plane, the control node 41 only needs to construct the internal packet header. The control plane of the cloud network is a network plane that sends control signaling between the control node and the measurement node. The internal packet header includes the packet header information of the service packet and the first identifier. Optionally, the internal packet header further includes the second identifier.

For a measurement packet in a data center network, the measurement packet includes the packet header information and the first identifier. Optionally, the internal packet header further includes the second identifier.

Optionally, the control node 41 sets the first identifier and the second identifier after the packet header information. For example, if a measurement packet at an L2 is pre-constructed, the first identifier and the second identifier are set after the L2 information, and the first identifier is adjacent to the L2 information. If a measurement packet at an L3 is pre-constructed, the first identifier and the second identifier are set after the L3 information, and the first identifier is adjacent to the L3 information. If a measurement packet at an L4 is pre-constructed, the first identifier and the second identifier are set after the L4 information, and the first identifier is adjacent to the L4 information.

Optionally, the measurement packet constructed by the control node 41 further includes a third identifier. The third identifier is used to identify whether the measurement packet includes a data part of the service packet. For example, when the third identifier is 0, it indicates that the measurement packet does not include the data part of the service packet; and when the third identifier is 1, it indicates that the measurement packet includes the data part of the service packet. Optionally, a length of the third identifier may be 4 bits, and the data part of the service packet may be partial internet control packet protocol (Internet Control Message Protocol, ICMP) information, an IP protocol header (IP Protocol Header), or the like.

Optionally, when the third identifier indicates that the measurement packet includes the data part of the service packet, the measurement packet constructed by the control node 41 further includes the data part of the service packet.

For example, FIG. 5 is a schematic diagram of a measurement packet on a forwarding plane according to an embodiment of this application. As shown in FIG. 5, the measurement packet includes an external packet header and an internal packet header. The external packet header includes an Ethernet header, an IP header, a UDP header, and a tunnel header related to a tunnel encapsulation manner. The internal packet header includes the L2 information, the L3 information, the L4 information, and a measurement standard header, and the measurement standard header includes: the first identifier, the second identifier, and the third identifier. In addition, the first identifier is adjacent to the L4 information. When a value of the third identifier is 1, the internal packet header further includes a data part of service data. In addition, the measurement standard header further includes: a reserved field, a length field, and a type length value (Type Length Value, TLV) field. The length field is used to indicate a length of the measurement packet.

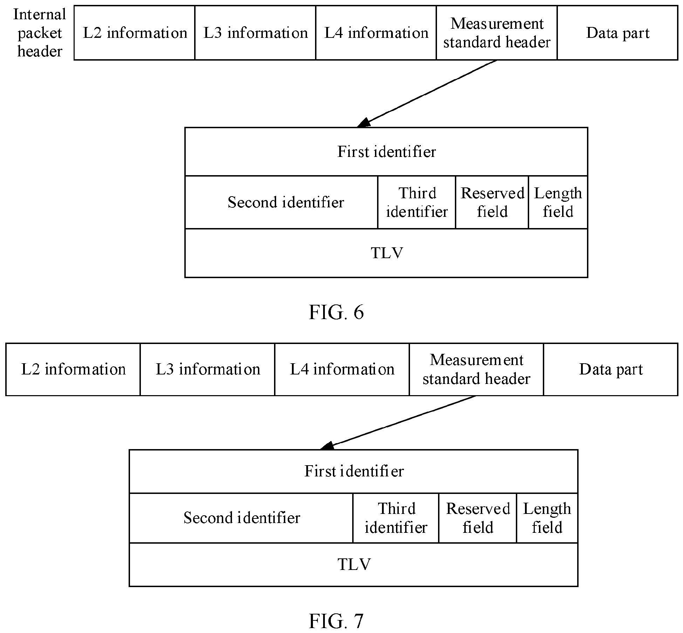

For example, FIG. 6 is a schematic diagram of a measurement packet on a control plane according to an embodiment of this application. As shown in FIG. 6, the measurement packet includes an internal packet header. The internal packet header includes the L2 information, the L3 information, the L4 information, and a measurement standard header, and the measurement standard header includes the first identifier, the second identifier, and the third identifier. In addition, the first identifier is adjacent to the L4 information. When a value of the third identifier is 1, the internal packet header further includes a data part of service data. In addition, the measurement standard header further includes: a reserved field, a length field, and a TLV field. The length field is used to indicate a length of the measurement packet.

For example, FIG. 7 is a schematic diagram of a measurement packet in a data center network according to an embodiment of this application. As shown in FIG. 7, the measurement packet includes the L2 information, the L3 information, the L4 information, and a measurement standard header, and the measurement standard header includes the first identifier, the second identifier, and the third identifier. In addition, the first identifier is adjacent to the L4 information. When a value of the third identifier is 1, the internal packet header further includes a data part of service data. In addition, the measurement standard header further includes: a reserved field, a length field, and a TLV field. The length field is used to indicate a length of the measurement packet.

Optionally, the control node 41 may obtain current network information, and may determine the to-be-measured path with reference to the foregoing measurement task, or determine the first measurement node and the first agent node. For example, for a cloud network, the control node 41 may obtain current cloud network information, and may determine the to-be-measured path with reference to the foregoing measurement task, or determine the first measurement node and the first agent node. The cloud network information includes at least one of the following: an identifier of a tenant computing instance, an object identifier of a network, a virtual port, a virtual subnet, a virtual router, and the like. Alternatively, the administrator may deliver the to-be-measured path, or an identifier of the first measurement node and an identifier of the first agent node to the control node 41 by using the web (web) page or the API. This is not limited in this embodiment of this application. It should be noted that the to-be-measured path includes at least two measurement nodes, for example, a first node and a last node. Certainly, the system may also obtain measurement information from a measurement node to perform network measurement. In this case, the control node 41 may determine the measurement node and an agent node corresponding to the measurement node based on the current network information in combination with the foregoing measurement task.

After generating the measurement packet, the control node 41 delivers the measurement packet to the first measurement node 43 by using the first agent node 44.

Before the first measurement node 43 captures the measurement packet, the control node 41 may deliver at least one packet capture rule to the first measurement node 43 by using the first agent node 44. Each packet capture rule includes the first identifier. Based on this, the first measurement node 43 may capture the measurement packet by using the first identifier. As described above, the measurement packet includes the packet header information of the service packet and the first identifier, and the packet header information of the service packet successively includes at least one of the following: the information of the service packet at the data link layer (that is, the L2 information), the information of the service packet at the network layer (that is, the L3 information), and the information of the service packet at the transport layer (that is, the L4 information). For example, the packet header information includes the L2 information of the service packet, or includes the L2 information and the L3 information of the service packet, or includes the L2 information, the L3 information, and the L4 information of the service packet. In this application, if the measurement packet includes the L2 information of the service packet, but does not include the L3 information and the L4 information, the measurement packet is referred to as the measurement packet at the L2. If the measurement packet includes the L2 information and the L3 information of the service packet, but does not include the L4 information, the measurement packet is referred to as the measurement packet at the L3. If the measurement packet includes the L2 information, the L3 information, and the L4 information of the service packet, the measurement packet is referred to as the measurement packet at the L4.

Correspondingly, the packet capture rule delivered by the control node 41 may include a packet capture rule for the measurement packet at the L2, a packet capture rule for the measurement packet at the L3, and a packet capture rule for the measurement packet at the L4.

Alternatively, the first agent node 44 delivers the packet capture rule to the first measurement node 43, or the administrator may configure the packet capture rule for the first measurement node 43 in a conventional manner such as a command line interface (Command Line Interface, CLI), a web (Web) page, or a simple network management protocol (Simple Network Management Protocol, SNMP).

It should be noted that, after a validity period of any first identifier ends, the foregoing packet capture rule needs to be updated.

Based on this, the first measurement node 43 is configured to capture the measurement packet according to a corresponding packet capturing rule. After capturing the measurement packet, the first measurement node 43 parses the measurement packet to obtain first measurement information of the measurement packet, and sends the first measurement information to the analysis node 42. The first measurement information includes at least one of the following: the measurement packet, time at which the first measurement node captures the measurement packet, the identifier of the first measurement node, and a quantity of measurement packets delivered in the measurement task.

Optionally, the first measurement node 43 may send the first measurement information to the analysis node 42 in the following manner. For example, the first measurement node 43 sends the first measurement information to the first agent node 44, so that the first agent node 44 sends the first measurement information to the analysis node 42. Alternatively, the first measurement node 43 directly sends the first measurement information to the analysis node 42.

After obtaining the first measurement information, the analysis node 42 analyzes the first measurement information to obtain a network measurement result. For example, the analysis node 42 may determine a packet capture duration of the first measurement node in advance based on performance of the first measurement node. After obtaining the time at which the first measurement node captures the measurement packet, the analysis node 42 may also determine a packet capture duration of the first measurement node based on the time at which the first measurement node captures the measurement packet, and compare the two packet capture durations to determine a packet capture delay of the first measurement node. The packet capture delay is a network measurement result. In addition, a delay, a delay jitter, a measurement node and a port that the measurement packet passes through, a related flow table, a port queue, and the like may also be determined.

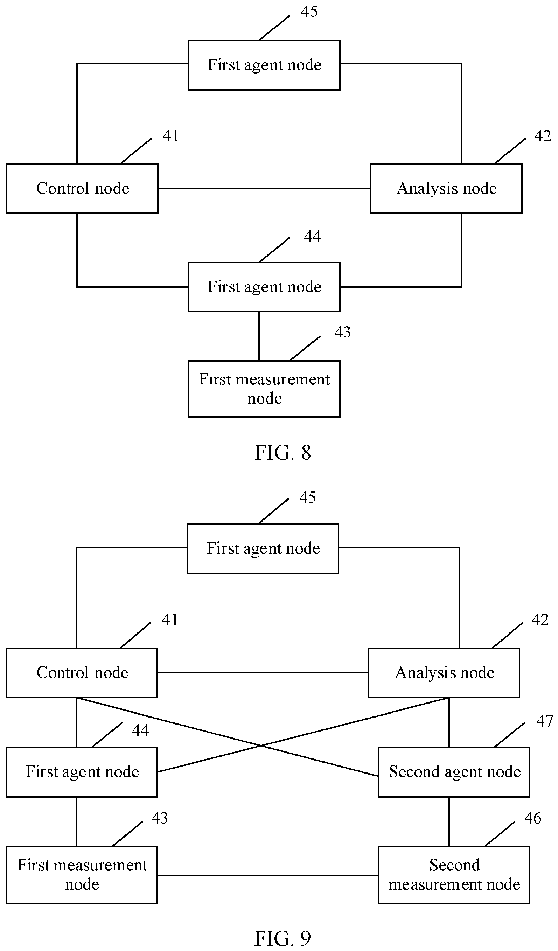

Optionally, the network measurement system may further include a storage node. FIG. 8 is a schematic diagram of a network measurement system according to another embodiment of this application. As shown in FIG. 8, in addition to a control node 41, an analysis node 42, a first measurement node 43, and a first agent node 44, the system further includes a storage node 45. The storage node 45 may be configured to store at least one of the following: a measurement task, first measurement information, and network information such as cloud network information. The storage node 45 may be a server including a configuration management database (Configuration Management Database, CMDB), or a centralized or distributed server cluster including a plurality of servers, or a chip circuit, or a VM, or a container, or the like. This is not limited in this application. The control node 41, the analysis node 42, and the storage node 45 may be disposed on a same server or a same chip circuit. This is not limited in this application.

It should be noted that, in the network measurement system provided in the foregoing embodiment, the control node may construct a measurement packet. Actually, the first measurement node may also construct a measurement packet. Optionally, the control node is configured to obtain the measurement task and a first identifier. The measurement task includes packet header information of a service packet. The first identifier is used to identify that the measurement packet is a packet used for network measurement. The control node sends the packet header information and the first identifier to the first measurement node by using the first agent node. The first measurement node generates the measurement packet based on the packet header information and the first identifier, captures and parses the measurement packet to obtain the first measurement information of the measurement packet, and sends the first measurement information to the analysis node. The analysis node is configured to obtain a network measurement result based on the first measurement information.

In conclusion, this application provides a network measurement system. The control node may obtain the packet header information of the service packet and the first identifier, and construct the measurement packet based on the packet header information and the first identifier, to perform network measurement based on the constructed measurement packet. Based on this, the control node does not need to perform network measurement by using the service packet. Therefore, normal service execution is not affected, and reliability of an entire communication network is improved.

Further, in the conventional technology, for a cloud network, an identifier in the service packet is carried in an external packet header, and a packet capture rule delivered by the control node carries the identifier, so that each measurement node captures the service packet by using the identifier. However, for a measurement node in an overlay virtual network, an external packet header of the measurement packet is removed. As a result, this type of measurement node cannot capture the service packet, and network measurement cannot be implemented. However, in this application, because the first identifier is carried after the packet header information, to be specific, for any measurement node, the first identifier is not removed, any measurement node can capture the measurement packet. This can implement network measurement.

In addition, for different service packets, corresponding packet capture rules are different. As a result, the control node delivers a large quantity of packet capture rules, for example, a label (Label) based on multi-protocol label switching (Multi-Protocol Label Switching, MPLS), an identifier of a virtual local area network (Virtual Local Area Network, VLAN), an address of an IP header, a port based on a transmission control protocol (Transmission Control Protocol, TCP), a Vxlan network identifier (Vxlan Network Identifier, VNI) of a Vxlan, packet capture rules at an L2, an L3, and an L4. This causes large network overheads. However, in this application, the control node only needs to construct the measurement packet, and the control node only needs to deliver at least one of a packet capture rule at the L2, a packet capture rule at the L3, and a packet capture rule at the L4. This can reduce network overheads.

According to the foregoing embodiment, further, the network measurement system further includes a second measurement node 46 and a second agent node 47. The first measurement node 43 and the second measurement node 46 are two measurement nodes on a to-be-measured path. Optionally, the first measurement node 43 and the second measurement node 46 may be a first node and an intermediate node on the to-be-measured path, or the first measurement node 43 and the second measurement node 46 may be a first node and a last node on the to-be-measured path. It is assumed that the second measurement node 46 is the last node on the to-be-measured path. The to-be-measured path may further include at least one intermediate node between the first measurement node 43 and the second measurement node 46. As the last node on the to-be-measured path, after parsing the measurement packet to obtain second measurement information, the second measurement node 46 may discard the measurement packet before entering a VM. The intermediate node may not discard the measurement packet. Other functions of the intermediate node are similar to functions of the second measurement node 46. Therefore, for functions of the intermediate node, refer to the functions of the second measurement node 46. Details are not described in the following.

For example, FIG. 9 is a schematic diagram of a network measurement system according to still another embodiment of this application. As shown in FIG. 9, the system includes a control node 41, an analysis node 42, a first measurement node 43, a first agent node 44, a storage node 45, a second measurement node 46, and a second agent node 47. The second measurement node 46 corresponds to the second agent node 47. In an overlay virtual network, each server includes an agent and a virtual switch. In this case, each virtual switch (namely, a measurement node) corresponds to one agent (namely, an agent node). As shown in FIG. 9, it is assumed herein that there is no intermediate node between the first measurement node 43 and the second measurement node 46.

It should be noted that the second agent node 47 and the first agent node 44 may be a same agent node, for example, a same SDN controller. Alternatively, the second agent node 47 and the first agent node 44 are not a same agent node. For example, the second agent node 47 and the first agent node 44 are two agents on different servers.

The control node 41 may deliver at least one packet capture rule to the second measurement node 46 by using the second agent node 47. For the packet capture rule, refer to the content of the foregoing embodiment, and details are not described herein again.

After obtaining a measurement packet from the control node 41, the first measurement node 43 may send the measurement packet into a forwarding plane, and send the measurement packet to the second measurement node 46 by using the forwarding plane. If there is an intermediate node between the first measurement node 43 and the second measurement node 46, the first measurement node 43 forwards the measurement packet to the second measurement node 46 by using the intermediate node. The second measurement node captures the measurement packet according to the obtained packet capture rule, parses the measurement packet to obtain second measurement information of the measurement packet, and sends the second measurement information to the analysis node 42. The second measurement information may include at least one of the following: the measurement packet, timestamp information of the measurement packet, an identifier of a node capturing the measurement packet, that is, an identifier of the second measurement node, and a quantity of measurement packets delivered in a measurement task. The timestamp information of the measurement packet is time at which the second measurement node captures the measurement packet. It should be noted that, it is assumed that a quantity of measurement packets delivered in the measurement task that is included in first measurement information is referred to as a first quantity, and a quantity of measurement packets delivered in the measurement task that is included in the second measurement information is referred to as a second quantity. Normally, the first quantity and the second quantity should be the same. When a network fault occurs, the two quantities are generally different. Therefore, after obtaining the first quantity and the second quantity, if determining that the second quantity is less than the first quantity, the analysis node 42 determines that a packet loss occurs on the second measurement node. The packet loss is a network measurement result.

The storage node 45 may be further configured to store the second measurement information.

Optionally, when the measurement packet is a request packet, the second measurement node 46 may further construct a response packet corresponding to the request packet, and send the response packet to the first measurement node 43.

In conclusion, this application provides a network measurement system. The control node may obtain packet header information of a service packet and a first identifier, and construct the measurement packet based on the packet header information and the first identifier, to perform network measurement based on the constructed measurement packet. Based on this, the control node does not need to perform network measurement by using the service packet. Therefore, normal service execution is not affected, and reliability of an entire communication network is improved.

Further, in the conventional technology, for a cloud network, an identifier in the service packet is carried in an external packet header, and a packet capture rule delivered by the control node carries the identifier, so that each measurement node captures the service packet by using the identifier. However, for a measurement node in the overlay virtual network, an external packet header of the measurement packet is removed. As a result, this type of measurement node cannot capture the service packet, and network measurement cannot be implemented. However, in this application, because the first identifier is carried after the packet header information, to be specific, for any measurement node, the first identifier is not removed, any measurement node can capture the measurement packet. This can implement network measurement.

In addition, for different service packets, packet capture rules corresponding to the service packets are different for the measurement node. This causes the control node to deliver a large quantity of packet capture rules, and causes a problem of high network overheads. However, in this application, the control node only needs to construct the measurement packet, and the control node only needs to deliver at least one of a packet capture rule at an L2, a packet capture rule at an L3, and a packet capture rule at an L4. This can reduce network overheads.

Further, for a last node on a to-be-measured path, that is, the foregoing second measurement node, after obtaining the second measurement information through parsing, the second measurement node may discard the measurement packet, to avoid impact on a normal service.

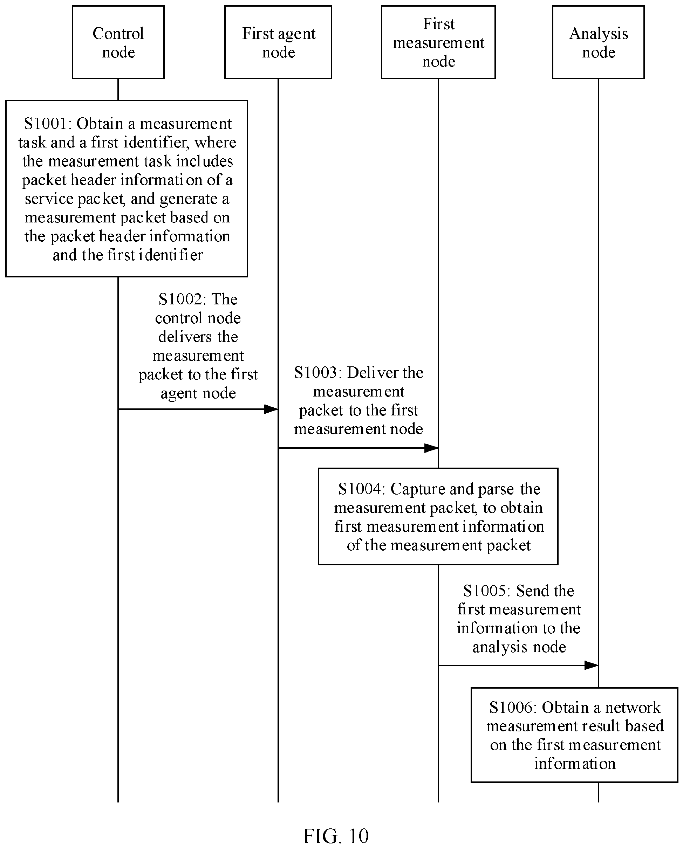

FIG. 10 is an interaction flowchart of a network measurement method according to an embodiment of this application. Network elements in the method include a control node, an analysis node, a first measurement node, and a first agent node. The first measurement node corresponds to the first agent node. As shown in FIG. 10, the method includes the following steps:
Step S1001: The control node obtains a measurement task and a first identifier, where the measurement task includes packet header information of a service packet, and generates a measurement packet based on the packet header information and the first identifier.

The first identifier is used to identify that the measurement packet is a packet used for network measurement.

Step S1002: The control node delivers the measurement packet to the first agent node.

Step S1003: The first agent node delivers the measurement packet to the first measurement node.

Step S1004: The first measurement node captures and parses the measurement packet, to obtain first measurement information of the measurement packet.

Step S1005: The first measurement node sends the first measurement information to the analysis node.

The first measurement information includes at least one of the following: the measurement packet, time at which the first measurement node captures the measurement packet, an identifier of the first measurement node, and a quantity of measurement packets delivered in the measurement task.

Step S1006: The analysis node obtains a network measurement result based on the first measurement information.

Optionally, the foregoing method is further related to the following network elements: a second measurement node and a second agent node. The second measurement node corresponds to the second agent node. Correspondingly, the method further includes: The first measurement node sends the measurement packet to the second measurement node; and the second measurement node captures and parses the measurement packet to obtain second measurement information of the measurement packet, and sends the second measurement information to the analysis node, where the second measurement information includes at least one of the following: the measurement packet, time at which the second measurement node captures the measurement packet, an identifier of the second measurement node, and the quantity of measurement packets delivered in the measurement task. Correspondingly, that the analysis node obtains a network measurement result based on the first measurement information includes: obtaining the network measurement result based on the first measurement information and the second measurement information.

Optionally, the second measurement node is a last node on a to-be-measured path, and correspondingly, the foregoing method further includes: The second measurement node discards the measurement packet after obtaining the second measurement information.

Optionally, if the measurement packet is a measurement packet on a forwarding plane of a cloud network, the measurement packet includes an external packet header and an internal packet header, the external packet header includes a tunnel header related to a tunnel encapsulation manner of the cloud network, and the internal packet header includes the packet header information and the first identifier.

Optionally, if the measurement packet is a measurement packet on a control plane of a cloud network, the measurement packet includes an internal packet header, and the internal packet header includes the packet header information and the first identifier.

Optionally, if the measurement packet is a measurement packet in a data center network, the measurement packet includes the packet header information and the first identifier.

Optionally, the first identifier is located after the packet header information.

Optionally, the measurement packet further includes a second identifier. The second identifier is used to identify the measurement task, and the second identifier is located after the packet header information.

Optionally, the method further includes: The control node delivers at least one packet capture rule to the first measurement node by using the first agent node. The packet capture rule includes the first identifier, so that the first measurement node captures the measurement packet by using the first identifier.

Optionally, the at least one packet capture rule in the Ethernet includes at least one of the following: a packet capture rule corresponding to a data link layer, a delivery rule corresponding to a network layer, and a delivery rule corresponding to a transport layer.

The network measurement method provided in this application may be performed by each node in the foregoing network measurement system. For content and an effect of the method, refer to system embodiments. Details are not described herein again.

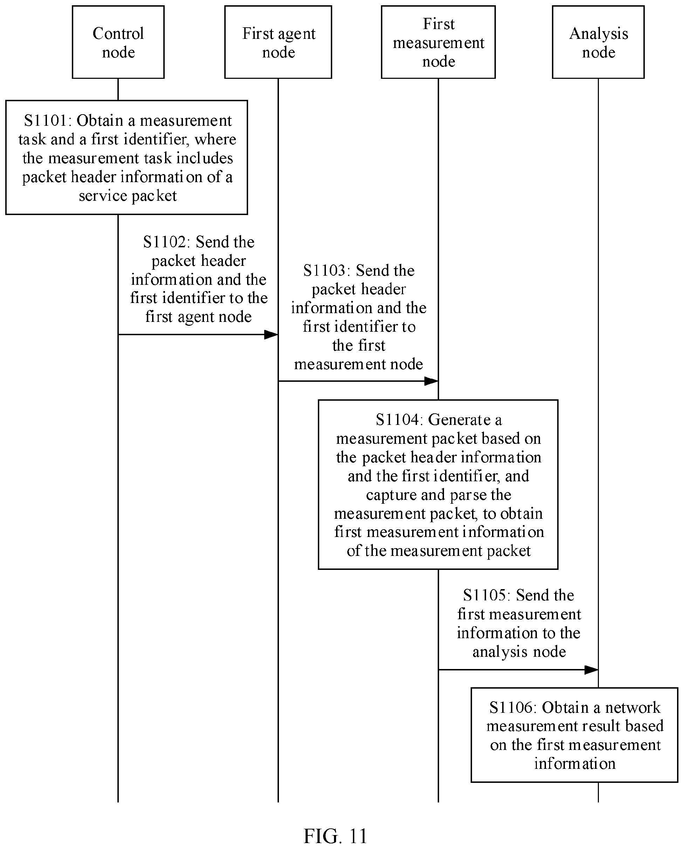

FIG. 11 is an interaction flowchart of a network measurement method according to another embodiment of this application. Network elements in the method include a control node, an analysis node, a first measurement node, and a first agent node. The first measurement node corresponds to the first agent node. As shown in FIG. 11, the method includes the following steps.

Step S1101: The control node obtains a measurement task and a first identifier, where the measurement task includes packet header information of a service packet.

The first identifier is used to identify that the measurement packet is a packet used for network measurement.

Step S1102: The control node sends the packet header information and the first identifier to the first agent node.

Step S1103: The first agent node sends the packet header information and the first identifier to the first measurement node.

Step S1104: The first measurement node generates a measurement packet based on the packet header information and the first identifier, and captures and parses the measurement packet, to obtain first measurement information of the measurement packet.

Step S1105: The first measurement node sends the first measurement information to the analysis node.

The first measurement information includes at least one of the following: the measurement packet, time at which the first measurement node captures the measurement packet, an identifier of the first measurement node, and a quantity of measurement packets delivered in the measurement task.

Step S1106: The analysis node obtains a network measurement result based on the first measurement information.

Optionally, the foregoing method is further related to the following network elements: a second measurement node and a second agent node. The second measurement node corresponds to the second agent node. Correspondingly, the method further includes: The first measurement node sends the measurement packet to the second measurement node; and the second measurement node captures and parses the measurement packet to obtain second measurement information of the measurement packet, and sends the second measurement information to the analysis node, where the second measurement information includes at least one of the following: the measurement packet, time at which the second measurement node captures the measurement packet, an identifier of the second measurement node, and the quantity of measurement packets delivered in the measurement task. Correspondingly, that the analysis node obtains a network measurement result based on the first measurement information includes: obtaining the network measurement result based on the first measurement information and the second measurement information.

Optionally, the second measurement node is a last node on a to-be-measured path, and correspondingly, the foregoing method further includes: The second measurement node discards the measurement packet after obtaining the second measurement information.

Optionally, if the measurement packet is a measurement packet on a forwarding plane of a cloud network, the measurement packet includes an external packet header and an internal packet header, the external packet header includes a tunnel header related to a tunnel encapsulation manner of the cloud network, and the internal packet header includes the packet header information and the first identifier.

Optionally, if the measurement packet is a measurement packet on a control plane of a cloud network, the measurement packet includes an internal packet header, and the internal packet header includes the packet header information and the first identifier.

Optionally, if the measurement packet is a measurement packet in a data center network, the measurement packet includes the packet header information and the first identifier.

Optionally, the first identifier is located after the packet header information.

Optionally, the measurement packet further includes a second identifier. The second identifier is used to identify the measurement task, and the second identifier is located after the packet header information.

Optionally, the method further includes: The control node delivers at least one packet capture rule to the first measurement node by using the first agent node. The packet capture rule includes the first identifier, so that the first measurement node captures the measurement packet by using the first identifier.

Optionally, the at least one packet capture rule in the Ethernet includes at least one of the following: a packet capture rule corresponding to a data link layer, a delivery rule corresponding to a network layer, and a delivery rule corresponding to a transport layer.

The network measurement method provided in this application may be performed by each node in the foregoing network measurement system. For content and an effect of the method, refer to system embodiments. Details are not described herein again.

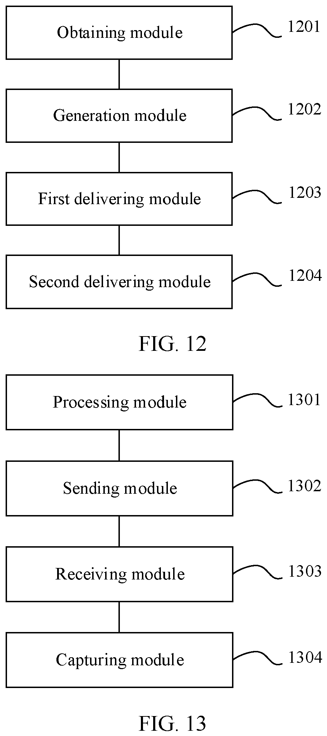

FIG. 12 is a schematic diagram of a control node according to an embodiment of this application. As shown in FIG. 12, the control node includes:
an obtaining module 1201, configured to obtain a measurement task and a first identifier, where the measurement task includes packet header information of a service packet;
a generation module 1202, configured to generate a measurement packet based on the packet header information and the first identifier; and
a first delivering module 1203, configured to deliver the measurement packet to a first measurement node by using a first agent node, where the first identifier is used to identify that the measurement packet is a packet used for network measurement.

Optionally, the control node further includes a second delivering module 1204, configured to deliver at least one packet capture rule to the first measurement node by using the first agent node. The packet capture rule includes the first identifier, so that the first measurement node captures the measurement packet by using the first identifier.

The control node provided in this application is the control node in the foregoing network measurement system. For content and an effect of the control node, refer to system embodiments. Details are not described herein again.

FIG. 13 is a schematic diagram of a first measurement node according to an embodiment of this application. As shown in FIG. 13, the first measurement node includes:
a processing module 1301, configured to capture and parse a measurement packet, to obtain first measurement information of the measurement packet, where the measurement packet is generated based on packet header information of a service packet and a first identifier, the first identifier is used to identify that the measurement packet is a packet used for network measurement, and the first measurement information includes at least one of the following: the measurement packet, time at which the first measurement node captures the measurement packet, an identifier of the first measurement node, and a quantity of measurement packets delivered in a measurement task; and
a sending module 1302, configured to send the first measurement information to an analysis node.

Optionally, the first measurement node further includes:
a receiving module 1303, configured to: before the processing module 1301 captures and parses the measurement packet, receive at least one packet capture rule delivered by a control node by using a first agent node, where the packet capture rule includes the first identifier; and
a capturing module 1304, configured to capture the measurement packet by using the first identifier.

The first measurement node provided in this application is the first measurement node in the foregoing network measurement system. For content and an effect of the first measurement node, refer to system embodiments. Details are not described herein again.

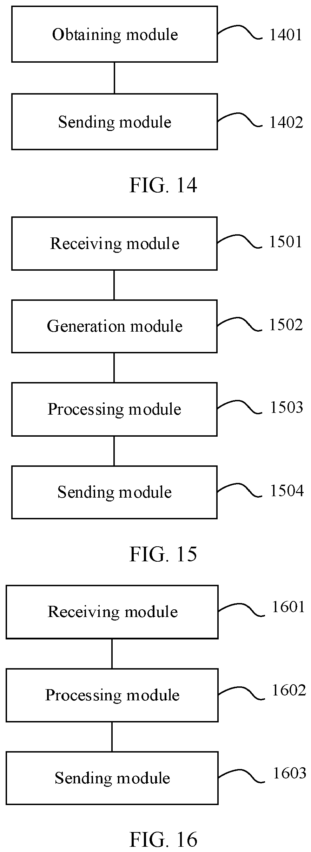

FIG. 14 is a schematic diagram of a control node according to another embodiment of this application. As shown in FIG. 14, the control node includes:
an obtaining module 1401, configured to obtain a measurement task and a first identifier, where the measurement task includes packet header information of a service packet; and
a sending module 1402, configured to send the packet header information and the first identifier to a first measurement node by using a first agent node, so that the first agent node generates a measurement packet based on the packet header information and the first identifier, where the first identifier is used to identify that the measurement packet is a packet used for network measurement.

The control node provided in this application is the control node in the foregoing network measurement system. For content and an effect of the control node, refer to system embodiments. Details are not described herein again.

FIG. 15 is a schematic diagram of a first measurement node according to another embodiment of this application. As shown in FIG. 15, the first measurement node includes:
a receiving module 1501, configured to receive packet header information of a service packet and a first identifier that are sent by a control node by using a first agent node;
a generation module 1502, configured to generate a measurement packet based on the packet header information and the first identifier, where the first identifier is used to identify that the measurement packet is a packet used for network measurement;
a processing module 1503, configured to capture and parse the measurement packet, to obtain first measurement information of the measurement packet; and
a sending module 1504, configured to send the first measurement information to an analysis node, where the first measurement information includes at least one of the following: the measurement packet, time at which the first measurement node captures the measurement packet, an identifier of the first measurement node, and a quantity of measurement packets delivered in a measurement task.

The first measurement node provided in this application is the first measurement node in the foregoing network measurement system. For content and an effect of the first measurement node, refer to system embodiments. Details are not described herein again.

FIG. 16 is a schematic diagram of a second measurement node according to another embodiment of this application. As shown in FIG. 16, the second measurement node includes:
a receiving module 1601, configured to receive a measurement packet sent by a first measurement node;
a processing module 1602, configured to capture and parse the measurement packet, to obtain second measurement information of the measurement packet, where the second measurement information includes at least one of the following: the measurement packet, time at which the second measurement node captures the measurement packet, an identifier of the second measurement node, and a quantity of measurement packets delivered in the measurement task; and
a sending module 1603, configured to send the second measurement information to an analysis node.

Optionally, the second measurement node is a last node on a to-be-measured path, and the second measurement node further includes a discarding module 1604, configured to discard the measurement packet after the processing module 1602 obtains the second measurement information.

The second measurement node provided in this application is the second measurement node in the foregoing network measurement system. For content and an effect of the second measurement node, refer to system embodiments. Details are not described herein again.

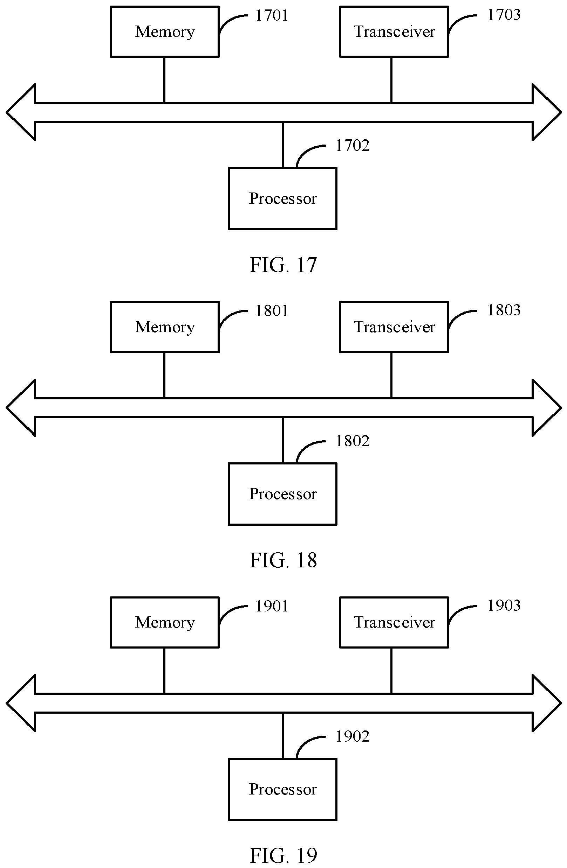

FIG. 17 is a schematic diagram of a control node according to an embodiment of this application. As shown in FIG. 17, the control node includes a memory 1701 and a processor 1702. The memory 1701 is configured to store computer instructions. The processor 1702 is configured to run the computer instructions stored in the memory 1701 to implement the network measurement method performed by the foregoing control node. The control node further includes a receiver 1703, configured to implement data transmission between the control node and another node.

The control node provided in this application is the control node in the foregoing network measurement system. For content and an effect of the control node, refer to system embodiments. Details are not described herein again.

FIG. 18 is a schematic diagram of a first measurement node according to an embodiment of this application. As shown in FIG. 18, the first measurement node includes a memory 1801 and a processor 1802. The memory 1801 is configured to store computer instructions. The processor 1802 is configured to run the computer instructions stored in the memory 1801 to implement the network measurement method performed by the foregoing first measurement node. The first measurement node further includes a receiver 1803, configured to implement data transmission between the first measurement node and another node.

The first measurement node provided in this application is the first measurement node in the foregoing network measurement system. For content and an effect of the first measurement node, refer to system embodiments. Details are not described herein again.

FIG. 19 is a schematic diagram of a second measurement node according to an embodiment of this application. As shown in FIG. 19, the second measurement node includes a memory 1901 and a processor 1902. The memory 1901 is configured to store computer instructions. The processor 1902 is configured to run the computer instructions stored in the memory 1901 to implement the network measurement method performed by the foregoing second measurement node. The second measurement node further includes a receiver 1903, configured to implement data transmission between the second measurement node and another node.

The second measurement node provided in this application is the second measurement node in the foregoing network measurement system. For content and an effect of the second measurement node, refer to system embodiments. Details are not described herein again.

This application further provides a chip. The chip is configured to perform the foregoing network measurement method. The method may be executed by a network element in the foregoing network measurement system. For content and an effect of the method, refer to system embodiments. Details are not described herein again.

This application further provides a storage medium, including a readable storage medium and computer instructions. The computer instructions are stored in the readable storage medium. The computer instructions are used to implement the foregoing network measurement method. For content and an effect of the method, refer to system embodiments. Details are not described herein again.

This application further provides a computer program product. The computer program product includes computer instructions (namely, a computer program), to implement the foregoing network measurement method. For content and an effect of the method, refer to system embodiments. Details are not described herein again.

## Claims

1. A network measurement system, comprising: a control node, an analysis node, a first measurement node, and a first agent node, wherein
the control node is configured to obtain a measurement task and a first identifier, wherein the measurement task comprises packet header information of a service packet, generate a measurement packet based on the packet header information and the first identifier, and deliver the measurement packet to the first measurement node by using the first agent node, wherein the first identifier is used to identify that the measurement packet is a packet used for network measurement;
the first measurement node is configured to capture and parse the measurement packet to obtain first measurement information of the measurement packet, and send the first measurement information to the analysis node, wherein the first measurement information comprises at least one of the following: the measurement packet, time at which the first measurement node captures the measurement packet, an identifier of the first measurement node, and a quantity of measurement packets delivered in the measurement task; and
the analysis node is configured to obtain a network measurement result based on the first measurement information.

2. The system according to claim 1, further comprising a second measurement node, wherein
the first measurement node is further configured to send the measurement packet to the second measurement node;
the second measurement node is configured to capture and parse the measurement packet to obtain second measurement information of the measurement packet, and send the second measurement information to the analysis node, wherein the second measurement information comprises at least one of the following: the measurement packet, time at which the second measurement node captures the measurement packet, an identifier of the second measurement node, and the quantity of measurement packets delivered in the measurement task; and
correspondingly, the analysis node is specifically configured to obtain the network measurement result based on the first measurement information and the second measurement information.

3. The system according to claim 2, wherein the second measurement node is a last node on a to-be-measured path, and the second measurement node is further configured to discard the measurement packet after obtaining the second measurement information.

4. The system according to any one of claims 1 to 3, wherein if the measurement packet is a measurement packet on a forwarding plane of a cloud network, the measurement packet comprises an external packet header and an internal packet header, the external packet header comprises a tunnel header related to a tunnel encapsulation manner of the cloud network, and the internal packet header comprises the packet header information and the first identifier.

5. The system according to any one of claims 1 to 3, wherein if the measurement packet is a measurement packet on a control plane of a cloud network, the measurement packet comprises an internal packet header, and the internal packet header comprises the packet header information and the first identifier.

6. The system according to any one of claims 1 to 3, wherein if the measurement packet is a measurement packet in a data center network, the measurement packet comprises the packet header information and the first identifier.

7. The system according to any one of claims 4 to 6, wherein the first identifier is located after the packet header information.

8. The system according to any one of claims 4 to 7, wherein the measurement packet further comprises a second identifier; and
the second identifier is used to identify the measurement task.

9. The system according to claim 8, wherein the second identifier is located after the packet header information.

10. The system according to any one of claims 1 to 9, wherein the control node is further configured to deliver at least one packet capture rule to the first measurement node by using the first agent node, and the packet capture rule comprises the first identifier, so that the first measurement node captures the measurement packet by using the first identifier.

11. The system according to claim 10, wherein the at least one packet capture rule in the Ethernet comprises at least one of the following: a packet capture rule corresponding to a data link layer, a delivery rule corresponding to a network layer, and a delivery rule corresponding to a transport layer.

12. A network measurement system, comprising: a control node, an analysis node, a first measurement node, and a first agent node, wherein
the control node is configured to obtain a measurement task and a first identifier, wherein the measurement task comprises packet header information of a service packet, and the first identifier is used to identify that the measurement packet is a packet used for network measurement;
the control node sends the packet header information and the first identifier to the first measurement node by using the first agent node;
the first measurement node generates the measurement packet based on the packet header information and the first identifier, generates and parses the measurement packet to obtain first measurement information of the measurement packet, and sends the first measurement information to the analysis node, wherein the first measurement information comprises at least one of the following: the measurement packet, time at which the first measurement node captures the measurement packet, an identifier of the first measurement node, and a quantity of measurement packets delivered in the measurement task; and
the analysis node is configured to obtain a network measurement result based on the first measurement information.

13. A network measurement method, comprising:
obtaining, by a control node, a measurement task and a first identifier, wherein the measurement task comprises packet header information of a service packet;
generating, by the control node, a measurement packet based on the packet header information and the first identifier; and
delivering, by the control node, the measurement packet to a first measurement node by using a first agent node, wherein the first identifier is used to identify that the measurement packet is a packet used for network measurement.

14. The method according to claim 13, further comprising:
the control node delivers at least one packet capture rule to the first measurement node by using the first agent node, wherein the packet capture rule comprises the first identifier, so that the first measurement node captures the measurement packet by using the first identifier.

15. A network measurement method, comprising:
capturing and parsing, by a first measurement node, a measurement packet, to obtain first measurement information of the measurement packet, wherein the measurement packet is generated based on packet header information of a service packet and a first identifier, the first identifier is used to identify that the measurement packet is a packet used for network measurement, and the first measurement information comprises at least one of the following: the measurement packet, time at which the first measurement node captures the measurement packet, an identifier of the first measurement node, and a quantity of measurement packets delivered in the measurement task; and
sending, by the first measurement node, the first measurement information to an analysis node.

16. The method according to claim 15, wherein before the capturing and parsing, by a first measurement node, a measurement packet, the method further comprises:
receiving, by the first measurement node, at least one packet capture rule delivered by a control node by using a first agent node, wherein the packet capture rule comprises the first identifier; and
capturing, by the first measurement node, the measurement packet by using the first identifier.

17. A network measurement method, comprising:
obtaining, by a control node, a measurement task and a first identifier, wherein the measurement task comprises packet header information of a service packet; and
sending, by the control node, the packet header information and the first identifier to a first measurement node by using a first agent node, so that the first agent node generates a measurement packet based on the packet header information and the first identifier, wherein the first identifier is used to identify that the measurement packet is a packet used for network measurement.

18. A network measurement method, comprising:
receiving, by a first measurement node, packet header information of a service packet and a first identifier that are sent by a control node by using a first agent node;
generating, by the first measurement node, a measurement packet based on the packet header information and the first identifier, wherein the first identifier is used to identify that the measurement packet is a packet used for network measurement;
capturing and parsing, by the first measurement node, the measurement packet, to obtain first measurement information of the measurement packet; and
sending, by the first measurement node, the first measurement information to an analysis node, wherein the first measurement information comprises at least one of the following: the measurement packet, time at which the first measurement node captures the measurement packet, an identifier of the first measurement node, and a quantity of measurement packets delivered in a measurement task.

19. A control node, comprising:
an obtaining module, configured to obtain a measurement task and a first identifier, wherein the measurement task comprises packet header information of a service packet;
a generation module, configured to generate a measurement packet based on the packet header information and the first identifier; and
a first delivering module, configured to deliver the measurement packet to a first measurement node by using a first agent node, wherein the first identifier is used to identify that the measurement packet is a packet used for network measurement.

20. The control node according to claim 19, further comprising:
a second delivering module, configured to deliver at least one packet capture rule to the first measurement node by using the first agent node, wherein the packet capture rule comprises the first identifier, so that the first measurement node captures the measurement packet by using the first identifier.

21. A measurement node, wherein the measurement node is a first measurement node and comprises:
a processing module, configured to capture and parse a measurement packet, to obtain first measurement information of the measurement packet, wherein the measurement packet is generated based on packet header information of a service packet and a first identifier, the first identifier is used to identify that the measurement packet is a packet used for network measurement, and the first measurement information comprises at least one of the following: the measurement packet, time at which the first measurement node captures the measurement packet, an identifier of the first measurement node, and a quantity of measurement packets delivered in a measurement task; and
a sending module, configured to send the first measurement information to an analysis node.

22. The measurement node according to claim 21, further comprising:
a receiving module, configured to: before the processing module captures and parses the measurement packet, receive at least one packet capture rule delivered by a control node by using a first agent node, wherein the packet capture rule comprises the first identifier; and
a capturing module, configured to capture the measurement packet by using the first identifier.

23. A control node, comprising:
an obtaining module, configured to obtain a measurement task and a first identifier, wherein the measurement task comprises packet header information of a service packet;
a sending module, configured to send the packet header information and the first identifier to a first measurement node by using a first agent node, so that the first agent node generates a measurement packet based on the packet header information and the first identifier, wherein the first identifier is used to identify that the measurement packet is a packet used for network measurement.

24. A measurement node, wherein the measurement node is a first measurement node and comprises:
a receiving module, configured to receive packet header information of a service packet and a first identifier that are sent by a control node by using a first agent node;
a generation module, configured to generate a measurement packet based on the packet header information and the first identifier, wherein the first identifier is used to identify that the measurement packet is a packet used for network measurement;
a processing module, configured to capture and parse the measurement packet, to obtain first measurement information of the measurement packet; and
a sending module, configured to send the first measurement information to an analysis node, wherein the first measurement information comprises at least one of the following: the measurement packet, time at which the first measurement node captures the measurement packet, an identifier of the first measurement node, and a quantity of measurement packets delivered in a measurement task.

25. A control node, comprising a memory and a processor, wherein
the memory is configured to store computer instructions, and the processor is configured to run the computer instructions stored in the memory to implement the network measurement method according to claim 13, 14, or 17.

26. A measurement node, comprising a memory and a processor, wherein
the memory is configured to store computer instructions, and the processor is configured to run the computer instructions stored in the memory to implement the network measurement method according to claim 15, 16, or 18.

27. A chip, wherein the chip is configured to perform the network measurement method according to any one of claims 13 to 18.

28. A computer storage medium, comprising computer-executable instructions, wherein the computer-executable instructions are used to implement the network measurement method according to any one of claims 13 to 18.
